(19) Europäisches Patentamt
European Patent Office
Office européen des brevets

(11) **EP 3 457 698 A1**

(12) **EUROPEAN PATENT APPLICATION**

(43) Date of publication:
**20.03.2019 Bulletin 2019/12**

(51) Int Cl.:
*H04N 19/597* (2014.01)   *H04N 19/70* (2014.01)
*H04N 19/174* (2014.01)   *H04N 19/167* (2014.01)
*H04N 19/154* (2014.01)

(21) Application number: **17306200.1**

(22) Date of filing: **18.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **GALPIN, Franck**
  **35576 Cesson-Sévigné (FR)**
• **RACAPE, Fabien**
  **35576 Cesson-Sévigné (FR)**
• **BORDES, Philippe**
  **35576 Cesson-Sévigné (FR)**

(74) Representative: **Huchet, Anne et al**
**InterDigital CE Patent Holdings**
**20, rue Rouget de Lisle**
**92130 Issy-les-Moulineaux (FR)**

(54)   **METHOD AND APPARATUS FOR CODING OF OMNIDIRECTIONAL VIDEO**

(57)   Methods and apparatus enable tools and operations for video coding related to equi-rectangular projections. These techniques use flags for selective enablement of the particular tools and operations, such that coding and decoding complexity can be reduced when possible. In one embodiment, flags are used at a slice level or a picture level to activate ERP motion vector prediction, ERP intra prediction, ERP based quantization parameter adaptation or other such functions. In another embodiment, ERP related tools can be enabled based on position within an image using flags. In other embodiments, ERP related tools can be enabled based on comparisons between a default motion difference and a ERP transformed motion difference, or based on an edge detection score with corresponding flags.

FIG. 20

**Description**

FIELD OF THE INVENTION

The following described aspects relate to the field of video compression generally and to the field of omnidirectional video, in particular.

BACKGROUND OF THE INVENTION

Recently there has been a growth of available large field of view content (up to 360°). Such content is potentially not fully visible by a user watching the content on immersive display devices such as Head Mounted Displays (HMD), smart glasses, PC screens, tablets, smartphones and the like. That means that at a given moment, a user may only be viewing a part of the content. However, a user can typically navigate within the content by various means such as head movement, mouse movement, touch screen, voice and the like. It is typically desirable to encode and decode this content.

SUMMARY OF THE INVENTION

These and other drawbacks and disadvantages of the prior art are addressed by at least one of the described embodiments, which are directed to a method and apparatus for designing a compact syntax adapted to equi-rectangular projection (ERP) or similar mappings specific tools such as ERP motion vector transformation and associated encoding methods.

In at least one embodiment, there is provided a method. The method comprises steps for encoding at least a portion of a video bitstream for a large field of view video, wherein at least one picture of said large field of view video is represented as a three-dimensional surface projected onto at least one two-dimensional picture using a projection function; performing an operation on said video corresponding to said projection function; and, inserting a flag in a syntax element of said video bitstream representative of said performance.

In at least one other embodiment, there is provided a method. The method comprises steps of parsing at least a portion of a video bitstream for a large field of view video, wherein at least one picture of said large field of view video is represented as a three-dimensional surface projected onto at least one two-dimensional picture using a projection function; detecting a flag in a syntax element of said video bitstream; determining whether to perform an operation on said video corresponding to said projection function, based on said flag; and, decoding said at least a portion of video bitstream.

In another embodiment, there is provided a method according to any of the aforementioned methods, wherein slice parameters are deduced from a flag indicating if ERP tools are activated. An activation mode is then set for slices.

In another embodiment, there is provided a method according to any of the aforementioned methods, wherein a multi-pass encoder is used to put ERP operations in the Rate Distortion Optimizer for choosing whether the tools are activated for a portion of a picture.

In another embodiment, there is provided a method according to any of the aforementioned methods, wherein a motion estimator is used to determine whether to activate ERP tools for a portion of a picture.

In another embodiment, there is provided a method according to any of the aforementioned methods, wherein an edge detector is used to determine whether to activate ERP tools for a portion of a picture.

In another embodiment, there is provided an apparatus. The apparatus comprises a memory and a processor. The processor is configured to perform any variation of the aforementioned method embodiments, for encoding or decoding.

According to another aspect described herein, there is provided a nontransitory computer readable storage medium containing data content generated according to the method of any one of the aforementioned method embodiments, or by the apparatus of any one of the aforementioned apparatus embodiments for playback using a processor.

According to another aspect described herein, there is provided a signal comprising video data generated according to the method of any one of the aforementioned method embodiments for coding a block of video data, or by the apparatus of any one of the aforementioned apparatus embodiments for coding a block of video data, for playback using a processor.

According to another aspect described herein, there is provided a computer program product comprising instructions which, when the program is executed by a computer, cause the computer to carry out the method of any one of the aforementioned method embodiments.

These and other aspects, features and advantages of the present principles will become apparent from the following detailed description of exemplary embodiments, which is to be read in connection with the accompanying drawings.

BRIEF DESCRIPTION OF THE DRAWINGS

Figure 1 illustrates an exemplary system for encoding and decoding omnidirectional videos, according to a specific and non-limiting embodiment,

Figures 2-6 illustrate a system configured to decode, process and render immersive videos according to various embodiments,

Figures 7-9 represents a system with an immersive wall configured to decode, process and render immersive videos according to various embodiments, and

Figures 10-12 represent immersive video rendering devices according to various embodiments.

Figure 13A and 13B illustrate an example of projection from a spherical surface S onto a rectangular picture F,

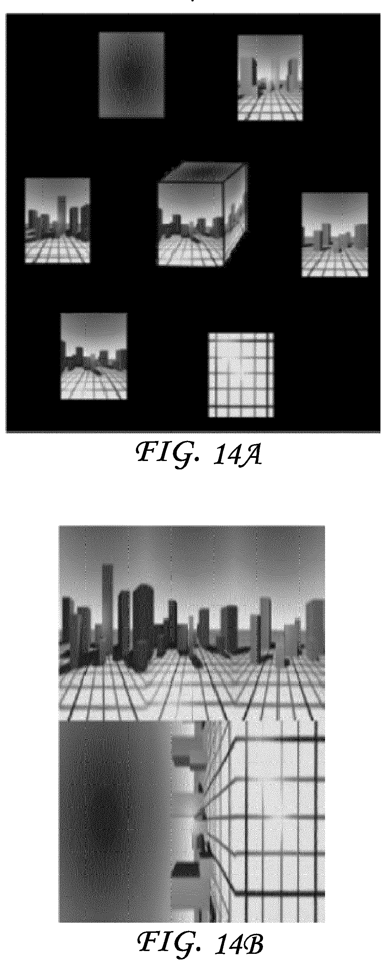

Figure 14A and 14B illustrate an example of projection from a cubic surface S onto six pictures, and a layout of the six faces of a cube projected on a 2D picture,

Figure 15A and 15B illustrate a moving object in a projected picture F of a 3D surface representing an omnidirectional video, and corresponding motion vectors in a block partitioning of the projected picture.

Figures 16A and 16B illustrate mapping from a frame coordinate to rendered frame, and from a rendered frame to an encoded frame.

Figure 17 illustrates an example flow chart embodiment of a video decoder.

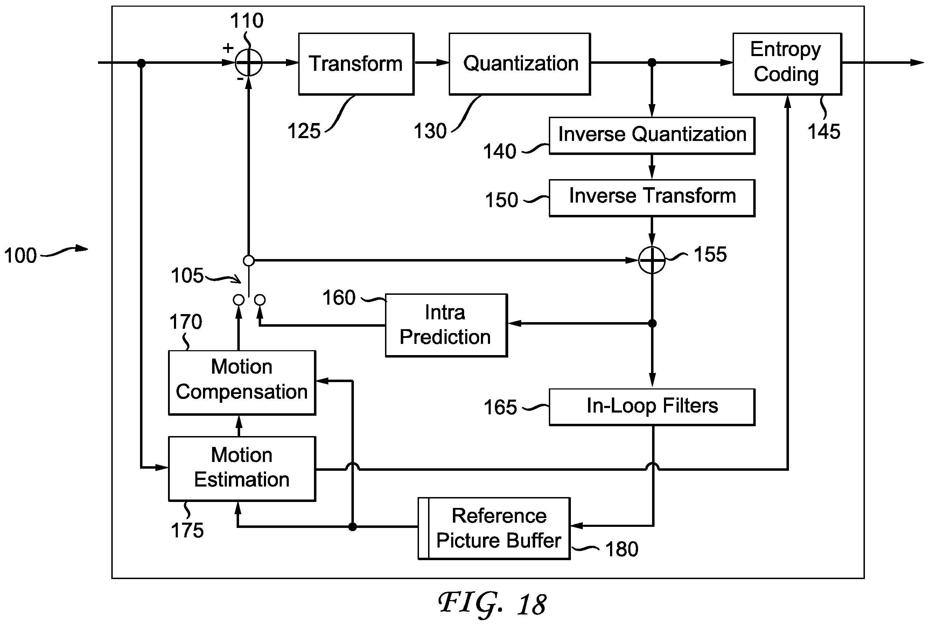

Figure 18 illustrates an example of an encoder to which the described aspects can be applied.

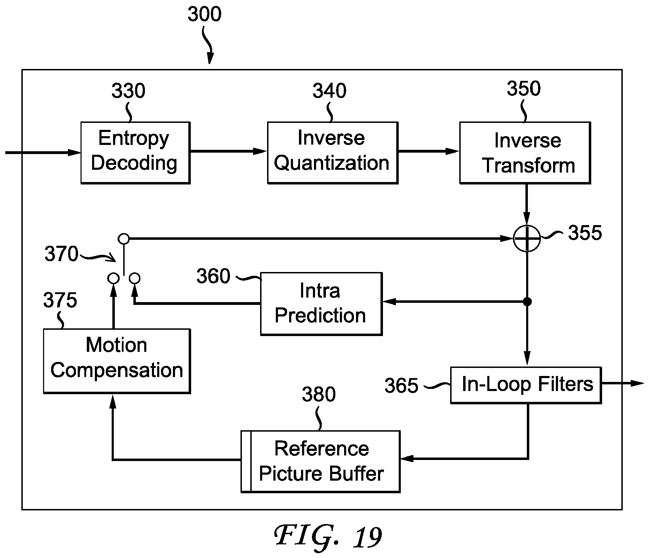

Figure 19 illustrates another example of a decoder to which the described aspects can be applied.

Figure 20 illustrates an example of automatic slice creation under the aspects described.

Figure 21 illustrates an example of a flow diagram for faster motion vector prediction derivation.

Figure 22 illustrates one embodiment of an encoding method according to the described aspects.

Figure 23 illustrates one embodiment of a decoding method according to the described aspects.

Figure 24 illustrates one embodiment of an apparatus for encoding or decoding according to the described aspects.

DETAILED DESCRIPTION

Omnidirectional content is usually projected on a given layout, so that the final content to encode/decode fits in a rectangular frame, which is convenient for processing by existing codecs. Depending on the mapping, geometric distortions might be introduced which can hurt the compression performance. Especially, the motion vector prediction might not be adapted when dealing with ERP mapping. The following embodiments can be extended to other mappings with similar properties as well.

At least one of the embodiments described is used in designing new motion vector prediction adapted to ERP mapping. Several improvements are made upon prior techniques, notably a better way to handle temporal motion vector predictor or a rescaled motion vector predictor.

A large field of view content may be, among others, a three-dimension computer graphic imagery scene (3D CGI scene), a point cloud or an immersive video. Many terms might be used to design such immersive videos such as for example virtual Reality (VR), 360, panoramic, $4\pi$, steradians, immersive, omnidirectional, large field of view.

An immersive video typically refers to a video encoded on a rectangular frame that is a two-dimension array of pixels (i.e., element of color information) like a "regular" video. In many implementations, the following processes may be performed. To be rendered, the frame is, first, mapped on the inner face of a convex volume, also called mapping surface (e.g., a sphere, a cube, a pyramid), and, second, a part of this volume is captured by a virtual camera. Images captured by the virtual camera are rendered on the screen of the immersive display device. A stereoscopic video is encoded on one or two rectangular frames, projected on two mapping surfaces which are combined to be captured by two virtual cameras according to the characteristics of the device.

Pixels may be encoded according to a mapping function in the frame. The mapping function may depend on the mapping surface. For a same mapping surface, several mapping functions are possible. For example, the faces of a cube may be structured according to different layouts within the frame surface. A sphere may be mapped according to an equirectangular projection or to a gnomonic projection for example. The organization of pixels resulting from the selected projection function modifies or breaks lines continuities, orthonormal local frame, pixel densities and introduces periodicity in time and space. These are typical features that are used to encode and decode videos. Existing encoding and decoding methods usually do not take specificities of immersive videos into account. Indeed, as immersive videos can be 360° videos, a panning, for example, introduces motion and discontinuities that require a large amount of data to be encoded while the content of the scene does not change. Taking immersive videos specificities into account while encoding and decoding video frames would bring valuable advantages to the encoding or decoding methods.

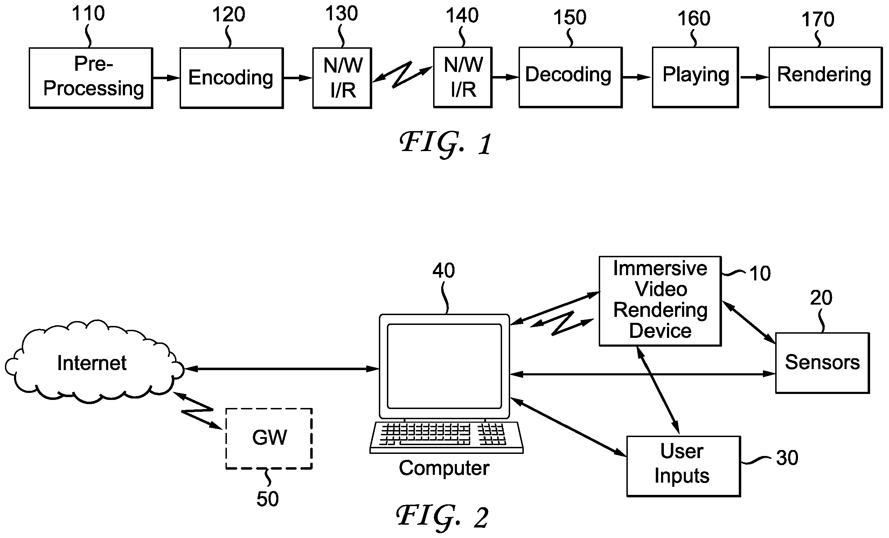

Figure 1 illustrates a general overview of an encoding and decoding system according to a specific and non-limiting embodiment. The system of figure 1 is a functional system. A pre-processing module 110 may prepare the content for encoding by the encoding device 120. The pre-processing module 110 may perform multi-image acquisition, merging of the acquired multiple images in a common space (typically a 3D sphere if we encode the directions), and mapping of the 3D sphere into a 2D frame using, for example, but not limited to, an equirectangular mapping or a cube mapping. The pre-processing module 110 may also accept an omnidirectional video in a particular format (for example, equirectangular) as input, and pre-processes the video to change the mapping into a format more suitable for encoding. Depending on the acquired video data representation, the pre-processing module 110 may perform a mapping space change.

The encoding device 120 and the encoding method will be described with respect to other figures of the specification. After being encoded, the data, which may encode immersive video data or 3D CGI encoded data for instance, are sent to a network interface 130, which can be typically implemented in any network interface, for instance present in a gateway. The data are then transmitted through a communication network, such as internet but any other network can be foreseen. Then the data are received via network interface 140. Network interface 140 can be implemented in a gateway, in a television, in a set-top box, in a head mounted display device, in an immersive (projective) wall or in any immersive video rendering device.

After reception, the data are sent to a decoding device 150. Decoding function is one of the processing functions described in the following figures 2 to 12. Decoded data are then processed by a player 160. Player 160 prepares the data for the rendering device 170 and may receive external data from sensors or users input data. More precisely, the player 160 prepares the part of the video content that is going to be displayed by the rendering device 170. The decoding device 150 and the player 160 may be integrated in a single device (e.g., a smartphone, a game console, a STB, a tablet, a computer, etc.). In other embodiments, the player 160 may be integrated in the rendering device 170.

Several types of systems may be envisioned to perform the decoding, playing and rendering functions of an immersive display device, for example when rendering an immersive video.

A first system, for processing augmented reality, virtual reality, or augmented virtuality content is illustrated in figures 2 to 6. Such a system comprises processing functions, an immersive video rendering device which may be a head mounted display (HMD), a tablet or a smartphone for example and may comprise sensors. The immersive video rendering device may also comprise additional interface modules between the display device and the processing functions. The processing functions can be performed by one or several devices. They can be integrated into the immersive video rendering device or they can be integrated into one or several processing devices. The processing device comprises one or several processors and a communication interface with the immersive video rendering device, such as a wireless or wired communication interface.

The processing device can also comprise a second communication interface with a wide access network such as internet and access content located on a cloud, directly or through a network device such as a home or a local gateway. The processing device can also access a local storage through a third interface such as a local access network interface of Ethernet type. In an embodiment, the processing device may be a computer system having one or several processing units. In another embodiment, it may be a smartphone which can be connected through wired or wireless links to the immersive video rendering device or which can be inserted in a housing in the immersive video rendering device and communicating with it through a connector or wirelessly as well. Communication interfaces of the processing device are wireline interfaces (for example a bus interface, a wide area network interface, a local area network interface) or wireless interfaces (such as a IEEE 802.11 interface or a Bluetooth® interface).

When the processing functions are performed by the immersive video rendering device, the immersive video rendering device can be provided with an interface to a network directly or through a gateway to receive and/or transmit content.

In another embodiment, the system comprises an auxiliary device which communicates with the immersive video rendering device and with the processing device. In such an embodiment, this auxiliary device can contain at least one of the processing functions.

The immersive video rendering device may comprise one or several displays. The device may employ optics such as lenses in front of each of its display. The display can also be a part of the immersive display device like in the case of smartphones or tablets. In another embodiment, displays and optics may be embedded in a helmet, in glasses, or in a visor that a user can wear. The immersive video rendering device may also integrate several sensors, as described later on. The immersive video rendering device can also comprise several interfaces or connectors. It might comprise one or several wireless modules in order to communicate with sensors, processing functions, handheld or other body parts related devices or sensors.

The immersive video rendering device can also comprise processing functions executed by one or several processors and configured to decode content or to process content. By processing content here, it is understood all functions to prepare a content that can be displayed. This may comprise, for instance, decoding a content, merging content before displaying it and modifying the content to fit with the display device.

One function of an immersive content rendering device is to control a virtual camera which captures at least a part of the content structured as a virtual volume. The system may comprise pose tracking sensors which totally or partially track the user's pose, for example, the pose of the user's head, in order to process the pose of the virtual camera. Some positioning sensors may track the displacement of the user. The system may also comprise other sensors related to environment for example to measure lighting, temperature or sound conditions. Such sensors may also be related to the users' bodies, for instance, to measure sweating or heart rate. Information acquired through these sensors may be used to process the content. The system may also comprise user input devices (e.g., a mouse, a keyboard, a remote control, a joystick). Information from user input devices may be used to process the content, manage user interfaces or to control the pose of the virtual camera. Sensors and user input devices communicate with the processing device and/or with the immersive rendering device through wired or wireless communication interfaces.

Using figures 2 to 6, several embodiments are described of this first type of system for displaying augmented reality, virtual reality, augmented virtuality or any content from augmented reality to virtual reality.

Figure 2 illustrates a particular embodiment of a system configured to decode, process and render immersive videos. The system comprises an immersive video rendering device 10, sensors 20, user inputs devices 30, a computer 40 and a gateway 50 (optional).

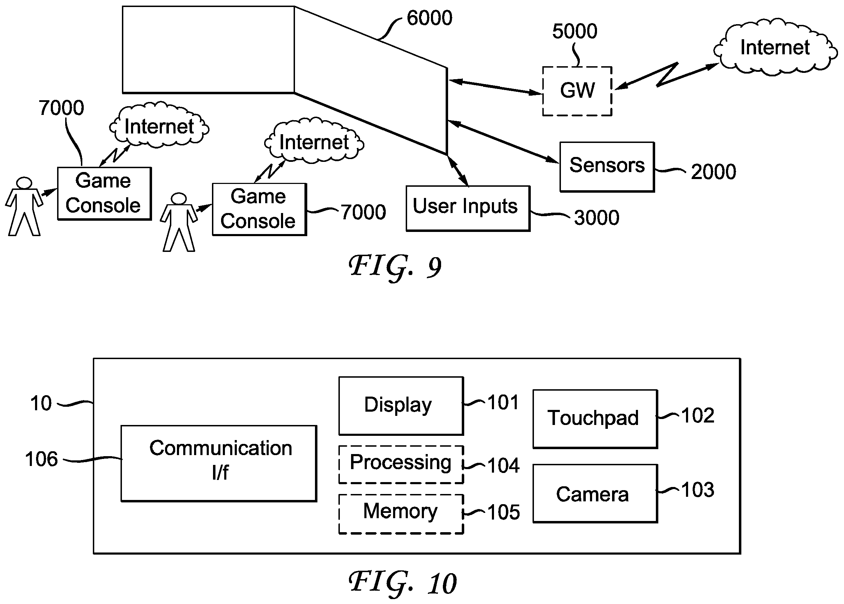

The immersive video rendering device 10, illustrated in Figure 10, comprises a display 101. The display is, for example of OLED or LCD type. The immersive video rendering device 10 is, for instance a HMD, a tablet or a smartphone. The device 10 may comprise a touch surface 102 (e.g., a touchpad or a tactile screen), a camera 103, a memory 105 in connection with at least one processor 104 and at least one communication interface 106. The at least one processor 104 processes the signals received from the sensors 20.

Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement. Data from sensors 20 and user input devices 30 can also be transmitted to the computer 40 which will process the data according to the input of these sensors.

Memory 105 includes parameters and code program instructions for the processor 104. Memory 105 can also comprise parameters received from the sensors 20 and user input devices 30. Communication interface 106 enables the immersive video rendering device to communicate with the computer 40. The communication interface 106 of the processing device may be wireline interfaces (for example a bus interface, a wide area network interface, a local area network interface) or wireless interfaces (such as a IEEE 802.11 interface or a Bluetooth® interface).

Computer 40 sends data and optionally control commands to the immersive video rendering device 10. The computer 40 is in charge of processing the data, i.e., prepare them for display by the immersive video rendering device 10. Processing can be done exclusively by the computer 40 or part of the processing can be done by the computer and part by the immersive video rendering device 10. The computer 40 is connected to internet, either directly or through a gateway or network interface 50. The computer 40 receives data representative of an immersive video from the internet, processes these data (e.g., decodes them and possibly prepares the part of the video content that is going to be displayed by the immersive video rendering device 10) and sends the processed data to the immersive video rendering device 10 for display. In another embodiment, the system may also comprise local storage (not represented) where the data representative of an immersive video are stored, said local storage can be on the computer 40 or on a local server accessible through a local area network for instance (not represented).

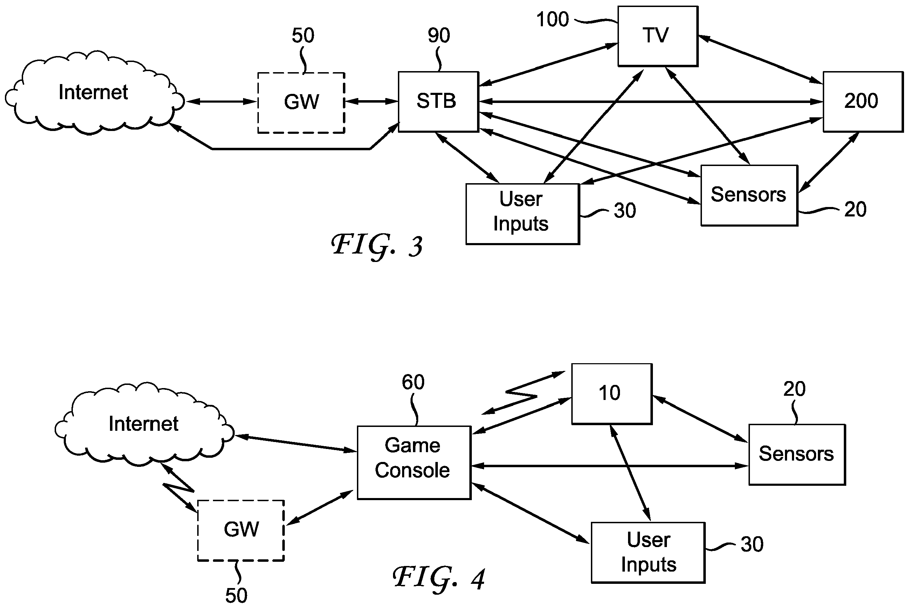

Figure 3 represents a second embodiment. In this embodiment, a STB 90 is connected to a network such as internet directly (i.e., the STB 90 comprises a network interface) or via a gateway 50. The STB 90 is connected through a wireless interface or through a wired interface to rendering devices such as a television set 100 or an immersive video rendering device 200. In addition to classic functions of a STB, STB 90 comprises processing functions to process video content for rendering on the television 100 or on any immersive video rendering device 200. These processing functions are the same as the ones that are described for computer 40 and are not described again here. Sensors 20 and user input devices 30 are also of the same type as the ones described earlier with regards to figure 2. The STB 90 obtains the data representative of the immersive video from the internet. In another embodiment, the STB 90 obtains the data representative of the immersive video from a local storage (not represented) where the data representative of the immersive video are stored.

Figure 4 represents a third embodiment related to the one represented in Figure 2. The game console 60 processes the content data. Game console 60 sends data and optionally control commands to the immersive video rendering device 10. The game console 60 is configured to process data representative of an immersive video and to send the processed data to the immersive video rendering device 10 for display. Processing can be done exclusively by the game console 60 or part of the processing can be done by the immersive video rendering device 10.

The game console 60 is connected to internet, either directly or through a gateway or network interface 50. The game console 60 obtains the data representative of the immersive video from the internet. In another embodiment, the game console 60 obtains the data representative of the immersive video from a local storage (not represented) where the data representative of the immersive video are stored, said local storage can be on the game console 60 or on a local server accessible through a local area network for instance (not represented).

The game console 60 receives data representative of an immersive video from the internet, processes these data (e.g., decodes them and possibly prepares the part of the video that is going to be displayed) and sends the processed data to the immersive video rendering device 10 for display. The game console 60 may receive data from sensors 20 and user input devices 30 and may use them to process the data representative of an immersive video obtained from the internet or from the from the local storage.

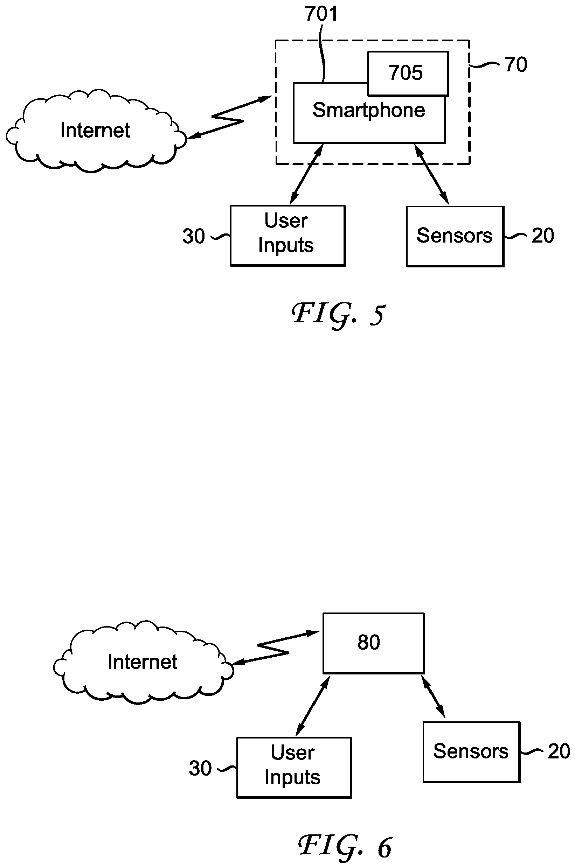

Figure 5 represents a fourth embodiment of said first type of system where the immersive video rendering device 70 is formed by a smartphone 701 inserted in a housing 705. The smartphone 701 may be connected to internet and thus may obtain data representative of an immersive video from the internet. In another embodiment, the smartphone 701 obtains data representative of an immersive video from a local storage (not represented) where the data representative of an immersive video are stored, said local storage can be on the smartphone 701 or on a local server accessible through a local area network for instance (not represented).

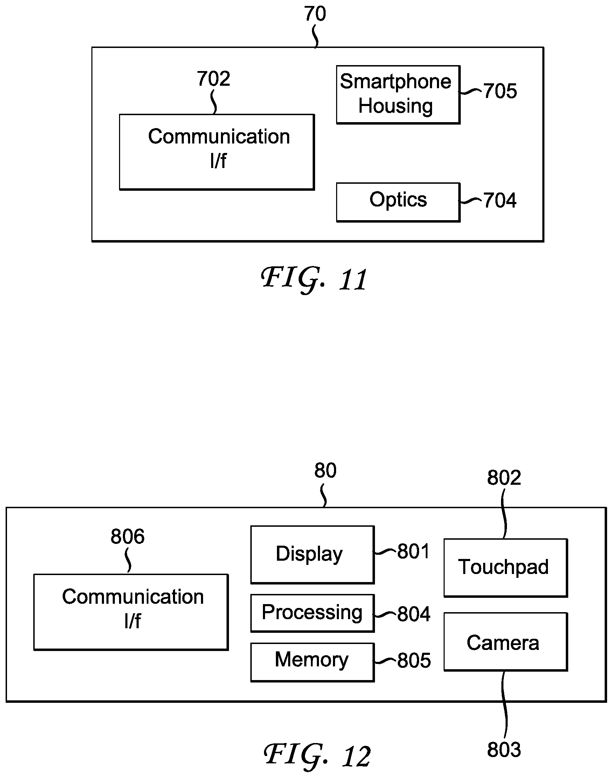

Immersive video rendering device 70 is described with reference to figure 11 which gives a preferred embodiment of immersive video rendering device 70. It optionally comprises at least one network interface 702 and the housing 705 for the smartphone 701. The smartphone 701 comprises all functions of a smartphone and a display. The display of the smartphone is used as the immersive video rendering device 70 display. Therefore, no display other than the one of the smartphone 701 is included. However, optics 704, such as lenses, are included for seeing the data on the smartphone display. The smartphone 701 is configured to process (e.g., decode and prepare for display) data representative of an immersive video possibly according to data received from the sensors 20 and from user input devices 30. Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement.

Figure 6 represents a fifth embodiment of said first type of system in which the immersive video rendering device 80 comprises all functionalities for processing and displaying the data content. The system comprises an immersive video rendering device 80, sensors 20 and user input devices 30. The immersive video rendering device 80 is configured to process (e.g., decode and prepare for display) data representative of an immersive video possibly according to data received from the sensors 20 and from the user input devices 30. The immersive video rendering device 80 may be connected to internet and thus may obtain data representative of an immersive video from the internet. In another embodiment, the immersive video rendering device 80 obtains data representative of an immersive video from a local storage (not represented) where the data representative of an immersive video are stored, said local storage can be on the rendering device 80 or on a local server accessible through a local area network for instance (not represented).

The immersive video rendering device 80 is illustrated in figure 12. The immersive video rendering device comprises a display 801. The display can be for example of OLED or LCD type. The device 80 may comprise a touch surface (optional) 802 (e.g., a touchpad or a tactile screen), a camera (optional) 803, a memory 805 in connection with at least one processor 804 and at least one communication interface 806. Memory 805 comprises parameters and code program instructions for the processor 804. Memory 805 can also comprise parameters received from the sensors 20 and user input devices 30. Memory can also be large enough to store the data representative of the immersive video content. For this several types of memories can exist and memory 805 can be a single memory or can be several types of storage (SD card, hard disk, volatile or non-volatile memory...) Communication interface 806 enables the immersive video rendering device to communicate with internet network. The processor 804 processes data representative of the video in order to display them of display 801. The camera 803 captures images of the environment for an image processing step. Data are extracted from this step in order to control the immersive video rendering device.

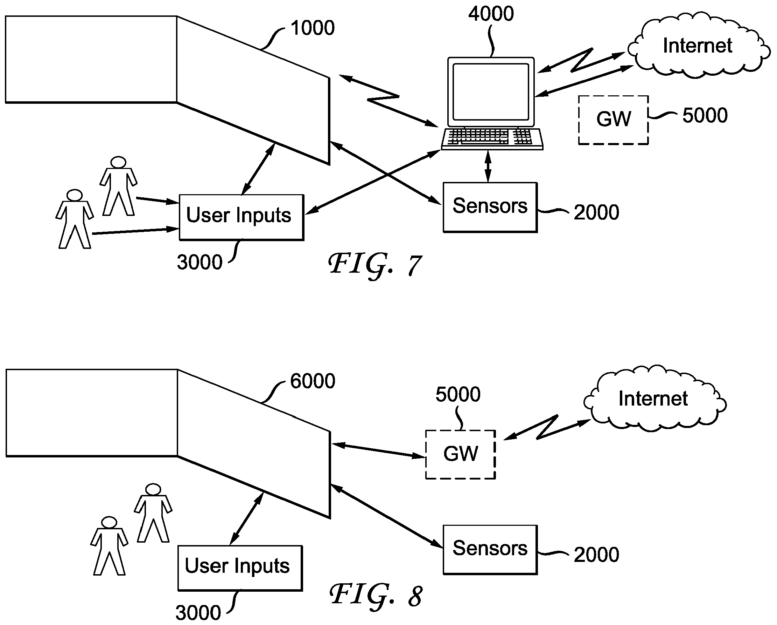

A second system, for processing augmented reality, virtual reality, or augmented virtuality content is illustrated in figures 7 to 9. Such a system comprises an immersive wall.

Figure 7 represents a system of the second type. It comprises a display 1000 which is an immersive (projective) wall which receives data from a computer 4000. The computer 4000 may receive immersive video data from the internet. The computer 4000 is usually connected to internet, either directly or through a gateway 5000 or network interface. In another embodiment, the immersive video data are obtained by the computer 4000 from a local storage (not represented) where the data representative of an immersive video are stored, said local storage can be in the computer 4000 or in a local server accessible through a local area network for instance (not represented).

This system may also comprise sensors 2000 and user input devices 3000.The immersive wall 1000 can be of OLED or LCD type. It can be equipped with one or several cameras. The immersive wall 1000 may process data received from the sensor 2000 (or the plurality of sensors 2000). The data received from the sensors 2000 may be related to lighting conditions, temperature, environment of the user, e.g., position of objects.

The immersive wall 1000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

Sensors 2000 and user input devices 3000 data may also be transmitted to the computer 4000. The computer 4000 may process the video data (e.g., decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection.

Computer 4000 sends the processed data and optionally control commands to the immersive wall 1000. The computer 4000 is configured to process the data, i.e., preparing them for display, to be displayed by the immersive wall 1000. Processing can be done exclusively by the computer 4000 or part of the processing can be done by the computer 4000 and part by the immersive wall 1000.

Figure 8 represents another system of the second type. It comprises an immersive (projective) wall 6000 which is configured to process (e.g., decode and prepare data for display) and display the video content. It further comprises sensors 2000, user input devices 3000.

The immersive wall 6000 receives immersive video data from the internet through a gateway 5000 or directly from internet. In another embodiment, the immersive video data are obtained by the immersive wall 6000 from a local storage (not represented) where the data representative of an immersive video are stored, said local storage can be in the immersive wall 6000 or in a local server accessible through a local area network for instance (not represented).

This system may also comprise sensors 2000 and user input devices 3000.The immersive wall 6000 can be of OLED or LCD type. It can be equipped with one or several cameras. The immersive wall 6000 may process data received from the sensor 2000 (or the plurality of sensors 2000). The data received from the sensors 2000 may be related to lighting conditions, temperature, environment of the user, e.g., position of objects.

The immersive wall 6000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

The immersive wall 6000 may process the video data (e.g., decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection. The immersive wall 6000 may comprise at least one communication interface to communicate with the sensors and with internet.

Figure 9 illustrates a third embodiment where the immersive wall is used for gaming. One or several gaming consoles 7000 are connected, preferably through a wireless interface to the immersive wall 6000. The immersive wall 6000 receives immersive video data from the internet through a gateway 5000 or directly from internet. In another embodiment, the immersive video data are obtained by the immersive wall 6000 from a local storage (not represented) where the data representative of an immersive video are stored, said local storage can be in the immersive wall 6000 or in a local server accessible through a local area network for instance (not represented).

Gaming console 7000 sends instructions and user input parameters to the immersive wall 6000. Immersive wall 6000 processes the immersive video content possibly according to input data received from sensors 2000 and user input devices 3000 and gaming consoles 7000 in order to prepare the content for display. The immersive wall 6000 may also comprise internal memory to store the content to be displayed.

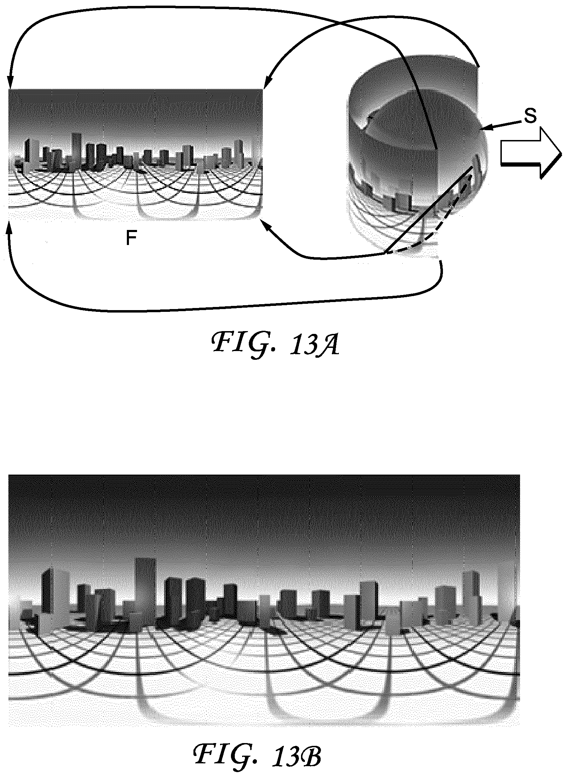

In one embodiment, we consider that the omnidirectional video is represented in a format that enables the projection of the surrounding three-dimensional (3D) surface S onto a standard rectangular frame F that is represented in a format suitable for a video codec. Various projections can be used to project 3D surfaces to two-dimensional (2D) surfaces. For example, figure 13A shows that an exemplary sphere surface S is mapped to a 2D frame F using an equirectangular projection (ERP), and figure 13B shows that an exemplary cube surface is mapped to a 2D frame using a cube mapping. Other mappings, such as pyramidal, icosahedral or octahedral mapping, can be used to map a 3D surface into a 2D frame. Such images require some new tools inside the video codec to consider the geometric properties of the image. An example of such tools is given in pending application "Motion transformation for VR". For these new tools, a flag is necessary to activate or not the tools. The syntax can then become too large and reduce the performance gain of the tools.

Another issue is that some of these tools can require additional processing and it is desirable to reduce the complexity when possible. Currently, the type of mapping used for a video is signaled without describing the use of a particular tool. A flag can be used, for example, in each coding unit to activate or deactivate the tool.

The 2D frame F can be encoded using existing video encoders, for example, encoders compliant with Google's VP9, AOMedia's AV1, MPEG-2 (ITU-T H.222/H.262), H.264/AVC (MPEG-4 Part 10, Advanced Video Coding), or H.265/HEVC (MPEG-H Part2, High Efficiency Video Coding). The 2D frame F can also be encoded with an encoder adapted to the properties of omnidirectional videos, for example, using an adapted VP9, VP10, MPEG-2, H.264/AVC, or H.265/HEVC encoder. After encoding and decoding, the decoded 2D frame can be mapped back to the corresponding 3D surface, for example, a sphere for an equi-rectangular mapping or a cube for cube mapping. The 3D surface can then be projected onto a "virtual screen" corresponding to a user's viewpoint in order to obtain the final rendered frame. The steps of decoding the 2D frame and projecting from the 3D surface to a rendered frame can be merged into a single step, where a part of the decoded frame is mapped onto the rendered frame.

For simplicity of notation, we may refer to the decoded 2D frame also as "F," and the 3D surface used in rendering also as S. It should be understood that the 2D frame to be encoded and the 2D frame to be decoded may be different due to video compression, and the 3D surface in pre-processing and the 3D surface in rendering may also be different. The terms "mapping" and "projection" may be used interchangeably, the terms "pixel" and "sample" may be used interchangeably, and the terms "frame" and "picture" may be used interchangeably.

The problem of mapping a three-dimensional (3D) surface to a rectangular surface has first been described for a typical layout of omnidirectional video, the equirectangular layout, but the general principle is applicable to any mapping from the 3D surface S to the rectangular frame F. The same principle can apply for example to the cube mapping layout.

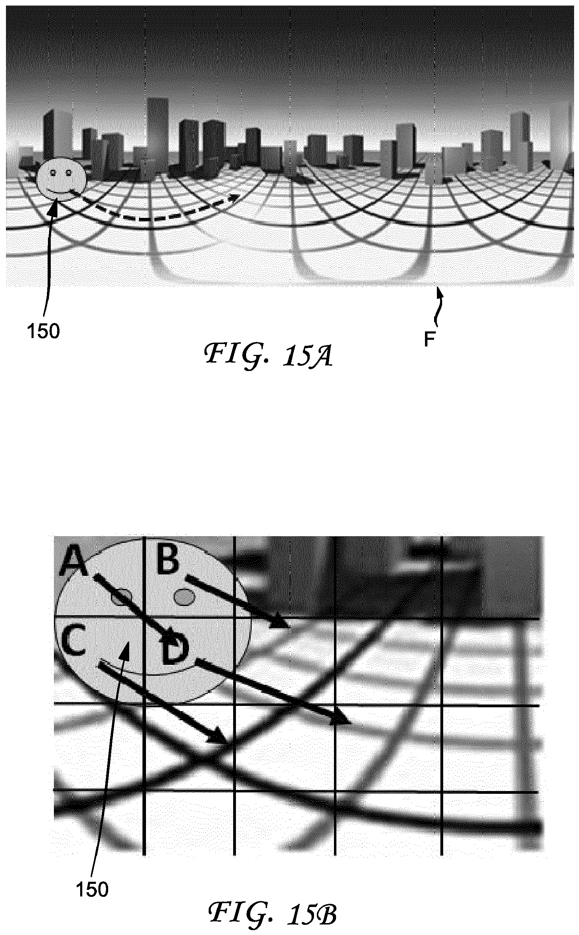

In Figures 15A and 15B, we show an example of an object moving along a straight line in the scene and the resulting apparent motion in the frame, shown by the dashed curve. The resulting motion vectors for an arbitrary Prediction Unit (PU) partition is shown on the right. As one can notice, even if the motion is perfectly straight in the rendered image, the frame to encode shows a non-uniform motion vector.

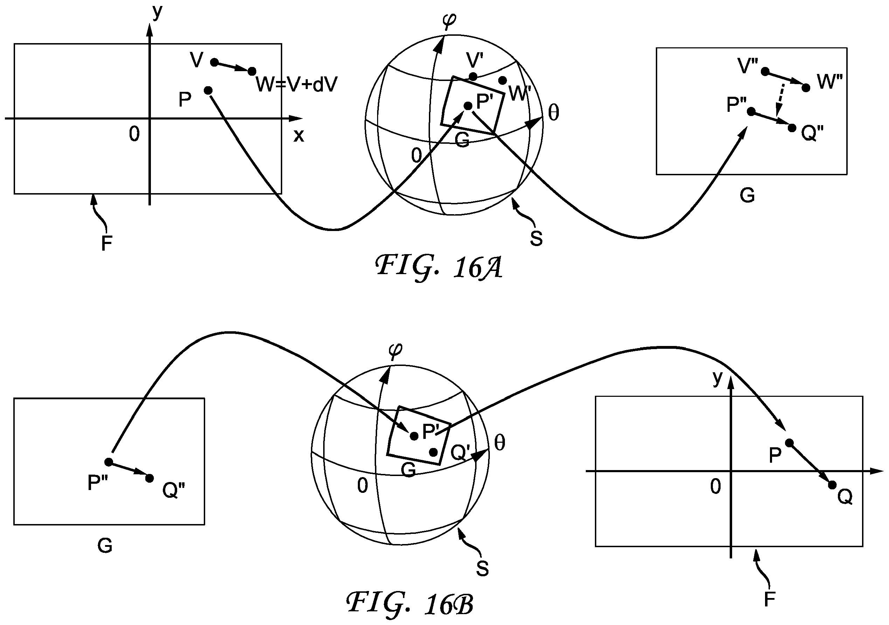

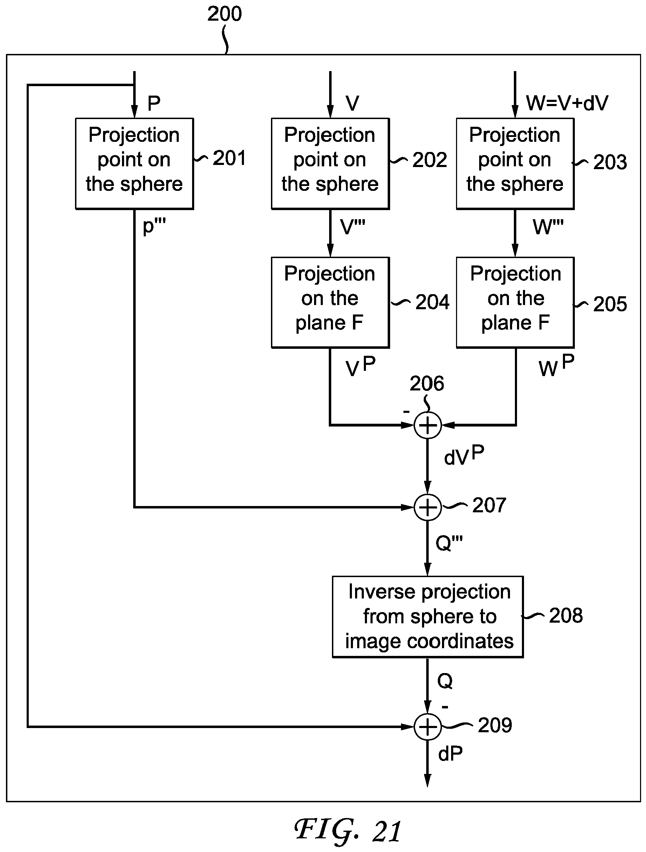

As background, and using the same notation as before, from figure 16A, a fast way to perform exact geometric transformation of a particular vector dV is done by the following process (corresponding to step 200 in Figure 21):

- P is the target point for which we want to predict the motion vector
- V is the source point from which we predict the motion vector
- dV is the motion vector at V

1- Compute P''' = 3d(P) (step 201 of Figure 21); note that P''' is on the unitary sphere and defines a plane F normal to the direction CP'', passing through the 3D sphere center C and through P'''

2- Compute V''' = 3d(V) (step 202 of Figure 21)

3- Compute $V^p = \dfrac{1}{P'''.V'''} V'''$ the projection of V''' on the plane F (step 204 of Figure 21)

4- Compute W = V + dV

5- Compute W''' = 3d(W) (step 203 of Figure 21)

6- Compute $W^p = \dfrac{1}{P'''.W'''} W'''$ the projection of W''' on the plane F (step 205 of Figure 21)

7- Compute dV$^p$ = W$^p$-V$^p$ the projection of motion vector on the plane F (step 206 of Figure 21)

8- Compute Q''' = Q$^p$ = P$^p$ + dV$^p$ = P''' + dV$^p$ (step of Figure 21)

9- Compute Q = 3d$^{-1}$(Q''') (step 208 of Figure 21)

10-Compute the final motion vector dP = Q - P (step 209 of Figure 21)

11-ERP(P,V,dV)=dP

In a first embodiment, in order to improve the performance of ERP specific tools, one can force the activation of specific tools such as:

- ERP transformed motion vector predictor, inter only
- ERP motion compensation, inter only
- ERP intra predictor
- ERP intra prediction
- ERP based Qp adaptation, intra and inter

These specific tools can be activated either at a slice level by using coding in the Slice Header, or at a picture level, using coding in the Picture Parameter Set (PPS). Table 1 shows a basic example of syntax that can be used:

| | Descriptor |
|---|---|
| If ( **frame_type** == erp ) {<br>    If (SLICE_TYPE == INTRA) { | |
|         **erp_tools_intra_prediction _activated** | u(1) |
|     } | |
|     If (SLICE_TYPE != INTER) { | |
|         **erp_tools_inter_prediction _activated** | u(1) |
|     } | |
| } | |

**Table 1**

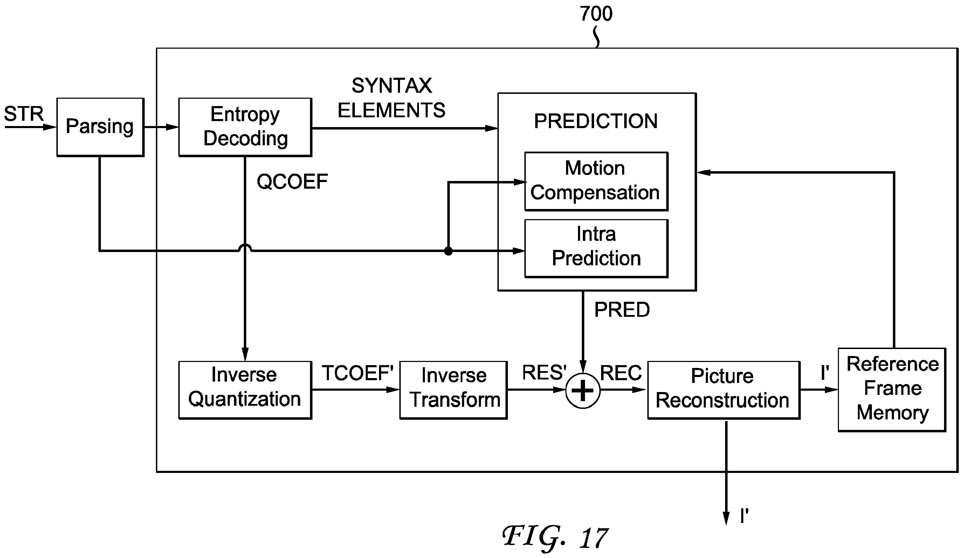

The above activation and deactivation can be found in the parsing block in figure 17.

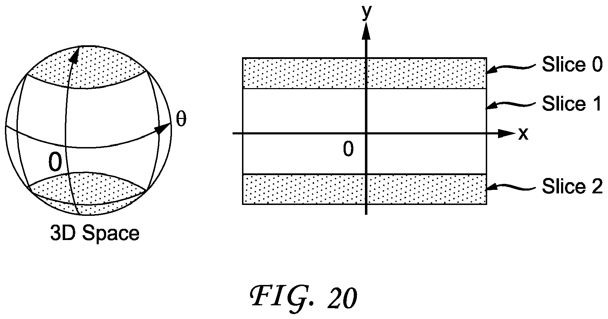

In a second embodiment, in order to decrease the encoder complexity, the tools can be automatically disabled for some parts of the image. Indeed, for ERP images, an area near the equator (near the center vertically of the image) are less subject to geometrical distortion. For example, fixing the limit at 45 degrees on the sphere of Figure 20 can create three slices, where slices 0 and 2 have the tool activated and slice 1 has it deactivated.

In another variation of the second embodiment, the three slice parameters are automatically deduced from a single flag indicating if ERP tools are activated. The activation mode is then automatically set for each slice.

In another variation of the second embodiment, the activation and deactivation is done by Coding Tree Unit (CTU) belonging to each part of the image and corresponding to the slice 0, 1, 2 areas, without the need of a slice.

In a third embodiment, an encoding method can be used to detect ERP mapping. At an encoder, a pre-processing operation detects the type of mapping, and thus the type of tools to activate and deactivate for the frame/slice. Below are some examples of encoding methods to activate and deactivate the ERP tools automatically:

First, a multi-pass coder can put the ERP tools in the Rate Distortion Optimization (RDO) as a mode choice. After a first encoding pass, if more than n% of the block use the ERP tools, the tool is activated/forced for the whole frame, or by slice.

Second, a motion estimator is performed on the frame. The compatibility of the motion field with an ERP transformation is computed:

- Default motion difference:

$$D = \sum_{p\ every\ N\ pixels} \sum_{q\ in\ neighborhood\ of\ p} |v(p) - v(q)|$$

where v(x) is the motion vector at pixel x, and where the neighborhood of a pixel p is defined for example as the top, bottom, left and right pixels at a distance N of p. The score D denotes the "regularity" of the motion field.

- ERP transformed motion difference:

$$D' = \sum_{p\ every\ N\ pixels} \sum_{q\ in\ neighborhood\ of\ p} |v(p) - ERP(p, q, v(q))|$$

where ERP(P,V,dV) is the function transforming the vector dV at V using the target point P. Such transformation is explained elsewhere. The tool is activated if D' < D or D' < a*D.

Third, an edge detection is performed on the frame (for example, a Canny detector). For each frame in the pole region (i.e., region close to the top and to the bottom of the frame), a rectitude score for all edges is computed. If the score is below a threshold, the frame is considered ERP and the tool is activated. The rectitude can be measured, for example, as the absolute sum of the local slopes of all lines.

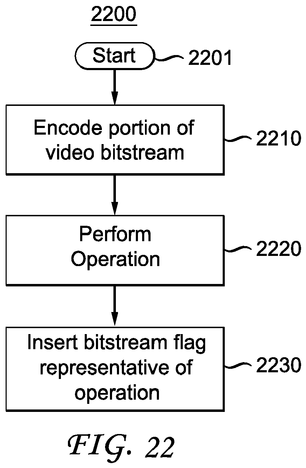

Figure 22 shows one embodiment of a method 2200 under the aspects described. The method commences at Start block 2201 and control proceeds to block 2210 for encoding at least a portion of a video bitstream for a large field of view video, wherein at least one picture of the large field of view video is represented as a three-dimensional surface projected onto at least one two-dimensional picture using a projection function. The method proceeds from block 2210 to block 2220 for performing an operation on the video corresponding to the projection function. Control proceeds from block 2220 to block 2230 for inserting a flag in a syntax element of the video bitstream representative of the operation performance.

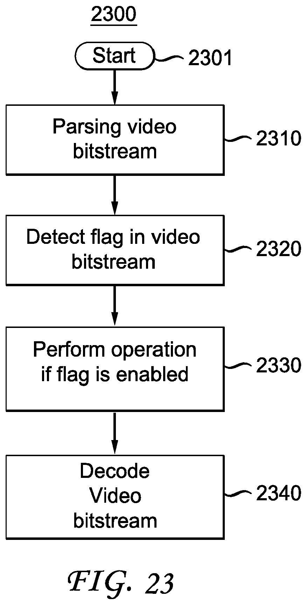

Figure 23 shows one embodiment of a method 2300 under the aspects described. The method commences at Start block 2301 and control proceeds to block 2310 for parsing at least a portion of a video bitstream for a large field of view video, wherein at least one picture of the large field of view video is represented as a three-dimensional surface projected onto at least one two-dimensional picture using a projection function. Control proceeds from block 2310 to block 2320 for detecting a flag in a syntax element of the video bitstream. Control proceeds from block 2320 to block 2330 for determining whether to perform an operation on the video corresponding to the projection function, based on the flag. Control proceeds from block 2330 to block 2340 for decoding the at least a portion of video bitstream.

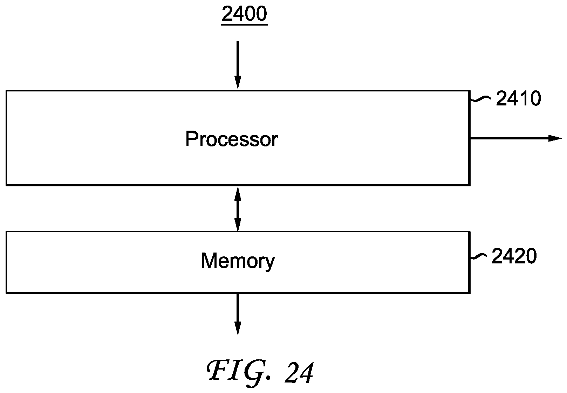

Figure 24 shows one embodiment of an apparatus 2400 for coding or decoding a block of video data. The apparatus comprises Processor 2410 which has input and output ports and is in signal connectivity with Memory 2420, also having input and output ports. The apparatus can execute any of the aforementioned method embodiments, or variations.

The functions of the various elements shown in the figures can be provided using dedicated hardware as well as hardware capable of executing software in association with appropriate software. When provided by a processor, the functions can be provided by a single dedicated processor, by a single shared processor, or by a plurality of individual processors, some of which can be shared. Moreover, explicit use of the term "processor" or "controller" should not be construed to refer exclusively to hardware capable of executing software, and can implicitly include, without limitation, digital signal processor ("DSP") hardware, read-only memory ("ROM") for storing software, random access memory ("RAM"), and non-volatile storage.

Other hardware, conventional and/or custom, can also be included. Similarly, any switches shown in the figures are conceptual only. Their function can be carried out through the operation of program logic, through dedicated logic, through the interaction of program control and dedicated logic, or even manually, the particular technique being selectable by the implementer as more specifically understood from the context.

The present description illustrates the present ideas. It will thus be appreciated that those skilled in the art will be able to devise various arrangements that, although not explicitly described or shown herein, embody the present ideas and are included within its scope.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which can be substantially represented in computer readable media and so executed by a computer or processor, whether or not such computer or processor is explicitly shown.

In the claims herein, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

In conclusion, methods and apparatus to enable tools and operations for video coding related to equi-rectangular projections are described. These techniques provide selective enablement of the particular tools and operations, such that coding and decoding complexity can be reduced when possible. In one embodiment, flags are used at a slice level or a picture level to active ERP motion vector prediction, ERP intra prediction, ERP based quantization parameter adaptation or other such functions. In another embodiment, ERP related tools can be enabled based on position within an image using flags. In other embodiments, ERP related tools can be enabled based on comparisons between a default motion difference and a ERP transformed motion difference, or based on an edge detection score with corresponding flags.

**Claims**

1. A method, comprising:

   encoding at least a portion of a video bitstream for a large field of view video, wherein at least one picture of said large field of view video is represented as a three-dimensional surface projected onto at least one two-dimensional picture using a projection function;
   performing an operation on said video corresponding to said projection function; and,
   inserting a flag in a syntax element of said video bitstream representative of said performance.

2. A method, comprising:

   parsing at least a portion of a video bitstream for a large field of view video, wherein at least one picture of said large field of view video is represented as a three-dimensional surface projected onto at least one two-dimensional picture using a projection function;
   detecting a flag in a syntax element of said video bitstream;
   determining whether to perform an operation on said video corresponding to said projection function, based on said flag; and,
   decoding said at least a portion of video bitstream.

3. An apparatus for coding at least a portion of video data, comprising:

   a memory, and
   a processor, configured to perform:

   encoding a video bitstream for a large field of view video, wherein at least one picture of said large field of view video is represented as a three-dimensional surface projected onto at least one two-dimensional picture using a projection function;
   performing an operation on said video corresponding to said projection function; and,
   inserting a flag in a syntax element of said video bitstream representative of said performance.

4. An apparatus for decoding at least a portion of video data, comprising:

   a memory, and
   a processor, configured to perform:

   parsing a video bitstream for a large field of view video, wherein at least one picture of said large field of view video is represented as a three-dimensional surface projected onto at least one two-dimensional picture using a projection function;
   detecting a flag in a syntax element of said video bitstream;
   determining whether to perform an operation on said video corresponding to said projection function, based on said flag; and,
   decoding said video bitstream.

5. The method of Claim 1 or 2, or the apparatus of Claim 3 or 4, wherein said operation comprises motion vector predictor transformation, motion compensation, intra prediction, intra predictor, or quantization parameter adaptation.

6. The method or apparatus of Claim 5, wherein said flag is in a slice header or in the picture parameter set.

7. The method of Claim 1 or 2, or the apparatus of Claim 3 or 4, wherein said flag is disabled for parts of said video image.

8. The method or the apparatus of Claim 7, wherein slice parameters are determined from said flag to indicate if said operation is activated.

9. The method or the apparatus of Claim 7, wherein said operation is performed by determining whether a coding tree unit belongs to a particular part of an image.

10. The method of Claim 1, or the apparatus of Claim 3, wherein said operation is activated for a particular part of a picture if a preprocessing step determines that a threshold percentage of blocks within the particular part of said picture uses said operation.

11. The method of Claim 1, or the apparatus of Claim 3, wherein said operation is activated based on a comparison of a default motion difference and an equi-rectangular projection transformed motion difference.

12. The method of Claim 1, or the apparatus of Claim 3, wherein an edge detection operation is performed, and said operation is activated for a frame in a pole region of said video based on a rectitude score of said edge detection operation.

13. A non-transitory computer readable medium containing data content generated according to the method of any one of claims 1 and 5 to 12, or by the apparatus of any one of claims 3 and 5 to 12, for playback using a processor.

14. A signal comprising video data generated according to the method of any one of claims 1 and 5 to 12, or by the apparatus of any one of claims 3 and 5 to 12, for playback using a processor.

15. A computer program product comprising instructions which, when the program is executed by a computer, cause the computer to carry out the method of any one of claims 2 and 5 to 9.

EP 3 457 698 A1

**FIG. 1**

**FIG. 2**

*FIG. 3*

*FIG. 4*

EP 3 457 698 A1

701

705

70

Internet

Smartphone

30 — User Inputs

Sensors — 20

*FIG. 5*

Internet

80

30 — User Inputs

Sensors — 20

*FIG. 6*

*FIG. 7*

*FIG. 8*

*FIG. 9*

EP 3 457 698 A1

*FIG. 10*

70

Communication I/f — 702

Smartphone Housing — 705

Optics — 704

*FIG. 11*

80    802

806

Communication I/f

Display — 801

Processing — 804

Memory — 805

Touchpad

Camera

803

*FIG. 12*

FIG. 13A

FIG. 13B

FIG. 14A

FIG. 14B

150

*FIG. 15A*

F

150

*FIG. 15B*

*FIG. 16A*

*FIG. 16B*

EP 3 457 698 A1

*FIG. 17*

EP 3 457 698 A1

*FIG. 18*

EP 3 457 698 A1

300

*FIG. 19*

EP 3 457 698 A1

3D Space

Slice 0
Slice 1
Slice 2

*FIG. 20*

200

```
        P                       V                      W=V+dV
        │                       │                       │
        ▼                       ▼                       ▼
┌───────────────┐       ┌───────────────┐       ┌───────────────┐
│  Projection   │       │  Projection   │       │  Projection   │
│  point on     │─ 201  │  point on     │─ 202  │  point on     │─ 203
│  the sphere   │       │  the sphere   │       │  the sphere   │
└───────────────┘       └───────────────┘       └───────────────┘
        │ P'''                  │ V'''                  │ W'''
        │                       ▼                       ▼
        │               ┌───────────────┐       ┌───────────────┐
        │               │  Projection   │       │  Projection   │
        │               │  on the       │─ 204  │  on the       │─ 205
        │               │  plane F      │       │  plane F      │
        │               └───────────────┘       └───────────────┘
        │                       │ V^P            206    │ W^P
        │                       │              ┌─┐      │
        │                       │        -    ╱   ╲     │
        │                       └──────────▶ (  +  ) ◀──┘
        │                                    ╲   ╱
        │                                     └─┘
        │                                      │ dV^P
        │                                    ┌─┐
        │                                   ╱   ╲
        └──────────────────────────────▶  (  +  )─ 207
                                           ╲   ╱
                                            └─┘
                                             │ Q'''
                                             ▼
                                    ┌───────────────────┐
                                    │ Inverse projection│
                                    │ from sphere to     │─ 208
                                    │ image coordinates  │
                                    └───────────────────┘
                                             │ Q
                                             │  -
                                           ┌─┐
                                          ╱   ╲
        ─────────────────────────────▶  (  +  )─ 209
                                          ╲   ╱
                                           └─┘
                                             │ dP
                                             ▼
```

*FIG. 21*

<u>2200</u>

Start — 2201

Encode portion of
video bitstream — 2210

Perform
Operation — 2220

Insert bitstream flag
representative of
operation — 2230

*FIG. 22*

2300

Start ~ 2301

Parsing video
bitstream ~ 2310

Detect flag in video
bitstream ~ 2320

Perform operation
if flag is enabled ~ 2330

Decode
Video
bitstream ~ 2340

*FIG. 23*

<u>2400</u>

```
┌─────────────────────────────────────┐  ⌐ 2410
│                                      │ ──────→
│              Processor               │
│                                      │
└─────────────────────────────────────┘
                  ↕
┌─────────────────────────────────────┐  ⌐ 2420
│               Memory                 │
└─────────────────────────────────────┘
                  ↓
```

*FIG. 24*

Europäisches
Patentamt

European
Patent Office

Office européen
des brevets

# EUROPEAN SEARCH REPORT

Application Number

EP 17 30 6200

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HANHART P ET AL: "InterDigital's Response to the 360Âo Video Category in Joint Call for Evidence on Video Compression with Capability beyond HEVC", 7. JVET MEETING; 13-7-2017 - 21-7-2017; TORINO; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-G0024, 6 July 2017 (2017-07-06), XP030150821, * paragraphs [0001], [02.1], [2.1.2], [02.2] * | 1-15 | INV. H04N19/597 H04N19/70 H04N19/174 H04N19/167 H04N19/154 |
| X | BOYCE J ET AL: "HEVC Additional Supplemental Enhancement Information (Draft 3)", 28. JCT-VC MEETING; 15-7-2017 - 21-7-2017; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-AB1005, 11 September 2017 (2017-09-11), XP030118280, * paragraph [D.2.41] * * paragraph [D3.41] * | 1-15 | |
| | | | TECHNICAL FIELDS SEARCHED (IPC) H04N G06T |
| X | YE Y ET AL: "Algorithm descriptions of projection format conversion and video quality metrics in 360Lib Version 4", 7. JVET MEETING; 13-7-2017 - 21-7-2017; TORINO; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-G1003, 17 August 2017 (2017-08-17), XP030150982, * the whole document * | 1-15 | |

-/--

The present search report has been drawn up for all claims

| Place of search | Date of completion of the search | Examiner |
|---|---|---|
| Munich | 12 February 2018 | Kuhn, Peter |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 17 30 6200

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HANNUKSELA (NOKIA) M M: "Support for 360-degree images in HEIF", 116. MPEG MEETING; 17-10-2016 - 21-10-2016; CHENGDU; (MOTION PICTURE EXPERT GROUP OR ISO/IEC JTC1/SC29/WG11),, no. m39236, 12 October 2016 (2016-10-12), XP030067582, * paragraph [0002] * ----- | 1-15 | |
| A | GALPIN F ET AL: "AHG8: Codec behavior on 360 videos", 6. JVET MEETING; 31-3-2017 - 7-4-2017; HOBART; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-F0039-v2, 31 March 2017 (2017-03-31), XP030150694, * paragraphs [0001], [0002], [0005] * ----- | 1-15 | TECHNICAL FIELDS SEARCHED (IPC) |

The present search report has been drawn up for all claims

| Place of search | Date of completion of the search | Examiner |
|---|---|---|
| Munich | 12 February 2018 | Kuhn, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)